(19) Europäisches Patentamt
European Patent Office
Office européen des brevets

(11) EP 4 252 342 B1

(12) FASCICULE DE BREVET EUROPEEN

(45) Date de publication et mention
de la délivrance du brevet:
**29.01.2025 Bulletin 2025/05**

(21) Numéro de dépôt: **21819088.2**

(22) Date de dépôt: **19.11.2021**

(51) Classification Internationale des Brevets (IPC):
***H02M 7/757*** *(2006.01)*

(52) Classification Coopérative des Brevets (CPC):
**H02M 7/757;** Y02T 10/70; Y02T 10/7072;
Y02T 90/14

(86) Numéro de dépôt international:
**PCT/EP2021/082379**

(87) Numéro de publication internationale:
**WO 2022/106662 (27.05.2022 Gazette 2022/21)**

(54) **CHARGEUR DE BATTERIES POUR VÉHICULE AUTOMOBILE, VÉHICULE ET PROCÉDÉ DE MISE EN OEUVRE ASSOCIÉS**

BATTERIELADEGERÄT FÜR KRAFTFAHRZEUG, ENTSPRECHENDES FAHRZEUG UND UMSETZUNGSVERFAHREN

BATTERY CHARGER FOR MOTOR VEHICLE, ASSOCIATED VEHICLE AND IMPLEMENTATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.11.2020 FR 2011983**

(43) Date de publication de la demande:
**04.10.2023 Bulletin 2023/40**

(73) Titulaire: **Ampere SAS
92100 Boulogne-Billancourt (FR)**

(72) Inventeur: **LOUDOT, Serge
91190 villiers le bacle (FR)**

(74) Mandataire: **Renault Group
Renault s.a.s.
1 avenue du Golf
FR TCR AVA 055
78084 Guyancourt Cedex (FR)**

(56) Documents cités:
**EP-A1- 3 386 087          DE-A1- 102019 201 706
US-A1- 2005 111 245**

• **SUN YAO ET AL: "Review of Active Power
Decoupling Topologies in Single-Phase
Systems", IEEE TRANSACTIONS ON POWER
ELECTRONICS, INSTITUTE OF ELECTRICAL
AND ELECTRONICS ENGINEERS, USA, vol. 31,
no. 7, 1 July 2016 (2016-07-01), pages 4778 -
4794, XP011597341, ISSN: 0885-8993, [retrieved
on 20160128], DOI: 10.1109/TPEL.2015.2477882**

## Description

La présente invention concerne un chargeur de batteries pour un véhicule automobile.

La présente invention concerne plus particulièrement un chargeur de batterie isolé réversible pour charger des batteries, un véhicule comportant un tel chargeur et un procédé de mise en oeuvre d'un tel chargeur.

Les véhicules automobiles peuvent être équipés d'une motorisation électrique comportant des moteurs électriques ou d'une motorisation hybride combinant par exemple un moteur thermique et des moteurs électriques, des batteries de traction pour stocker de l'énergie afin d'alimenter les moteurs électriques, et des chargeurs pour recharger les batteries de traction.

Le document EP3317955 divulgue un chargeur 1 de batterie isolé réversible pour charger une batterie à partir d'un réseau électrique monophasé ou triphasé.

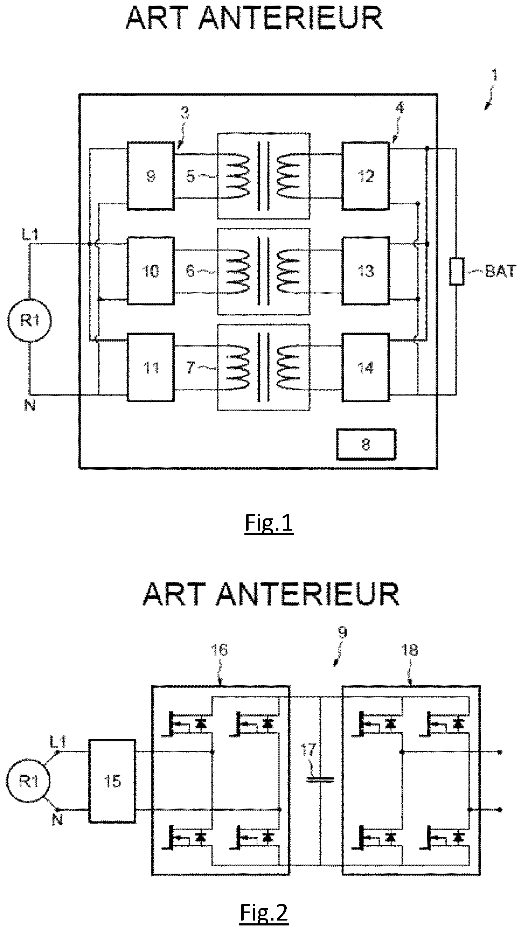

La figure 1 illustre le chargeur 1 relié en entrée à un réseau R1 monophasé (mode monophasé), et en sortie à une batterie BAT.

Le chargeur 1 comprend un circuit primaire 3 relié au réseau R1 et un circuit secondaire 4 relié au circuit primaire 3 par l'intermédiaire de transformateurs monophasés 5, 6 et 7, et un filtre actif 8.

Le circuit primaire 3 comprend trois convertisseurs de puissance électrique primaires 9, 10, 11 réversibles identiques reliés chacun en entrée à la phase L1 et au neutre N du réseau R1.

Chaque convertisseur de puissance électrique primaire 9, 10, 11 est relié en sortie à une bobine primaire formant l'enroulement primaire du transformateur 5, 6, 7.

Le premier circuit secondaire 4 comprend trois convertisseurs de puissance secondaire 12, 13, 14 réversibles identiques reliés chacun en entrée à une bobine secondaire formant l'enroulement secondaire du transformateur 5, 6, 7, chaque convertisseur de puissance secondaire 12, 13, 14 étant en outre relié à la batterie BAT.

Le chargeur 1 charge la batterie BAT à partir du réseau R1.

La filtre actif 8 permet de compenser les pulsations de puissance lorsque le chargeur 1 est alimenté par le réseau R1.

La figure 2 illustre l'architecture du convertisseur de puissance électrique primaire 9.

Le convertisseur de puissance électrique primaire 9 comprend un filtre d'entrée 15 relié en entrée au neutre N et à la phase L1 du réseau R1, un étage de commutation basse fréquence 16, un condensateur de filtrage 17 et un étage de commutation haute fréquence 18.

L'étage de commutation basse fréquence 16 est relié en entrée au filtre 15 et comprend deux bornes de sortie reliées à deux bornes d'entrée de l'étage de commutation haute fréquence 18, des sorties de l'étage de commutation haute fréquence 18 étant reliées à la bobine primaire du transformateur 5.

Le condensateur 17 est relié entre les deux bornes de sortie de l'étage de commutation basse fréquence 16.

Les étages de commutation haute fréquence 18 et basse fréquence 16 comprennent chacun quatre cellules de commutation réalisées à partir de diodes et de transistor.

L'étage de commutation basse fréquence 16 fonctionnant à basse fréquence, par exemple 50 Hz ou 60 Hz, délivre en entrée de l'étage haute fréquence 18 fonctionnant à haute fréquence, par exemple de 135 kHz à 500 kHz, une tension unipolaire.

Lorsque le chargeur 1 est alimenté par un réseau d'alimentation électrique triphasé (mode triphasé), chaque convertisseur de puissance électrique primaire 9, 10, 11 est relié à une phase différente du réseau triphasé.

Cependant, lorsque le chargeur 1 fonctionne en mode monophasé, un filtre actif peut être nécessaire pour compenser les pulsations de puissance, les convertisseurs primaires étant chacun relié à la phase L1.

L'implantation du filtre dans le chargeur nécessite une fonction électronique associée à un espace dédié pour le filtre actif et complexifie le fonctionnement du chargeur.

En outre, l'utilisation du chargeur en mode monophasé ou en mode triphasé nécessite la mise en oeuvre de trois transformateurs monophasés nécessitant chacun un espace dédié dans le chargeur et dégradant le rendement du chargeur 1.

Il est donc proposé de pallier tout ou partie des inconvénients des dispositifs de charge selon l'état de la technique, notamment en proposant un chargeur compact et présentant un rendement amélioré.

Au vu de ce qui précède, l'invention propose un chargeur de batterie pour véhicule automobile comprenant un convertisseur de puissance électrique primaire et un convertisseur de puissance électrique secondaire reliés par un transformateur, le convertisseur de puissance primaire et le convertisseur de puissance secondaire étant configurés pour transférer la puissance instantanée maximale délivrée par un réseau d'alimentation électrique ou une batterie respectivement à la batterie ou au réseau d'alimentation électrique.

Le chargeur comprend :

- au moins un convertisseur de puissance électrique primaire de compensation comportant un étage de commutation haute fréquence relié en sortie au transformateur,

- un condensateur de filtrage relié entre deux bornes d'entrée de l'étage de commutation haute fréquence du convertisseur primaire de compensation,
- au moins un convertisseur de puissance électrique secondaire de compensation relié au convertisseur primaire de compensation par l'intermédiaire d'un transformateur, et
- un condensateur de stockage commutable relié entre les deux bornes d'entrée de l'étage de commutation haute fréquence du convertisseur primaire de compensation,
- le convertisseur de puissance électrique secondaire de compensation et l'étage de commutation haute fréquence du convertisseur primaire de compensation étant configurés pour charger ou décharger le condensateur de stockage en fonction d'une consigne de puissance instantanée.

Selon une caractéristique, le chargeur comprend en outre un deuxième condensateur de stockage commutable relié entre les deux bornes d'entrée d'un deuxième étage de commutation haute fréquence d'un deuxième convertisseur de puissance électrique primaire de compensation, et un deuxième convertisseur de puissance électrique secondaire de compensation relié au deuxième convertisseur primaire de compensation par l'intermédiaire d'un transformateur, le deuxième convertisseur secondaire de compensation et le deuxième étage de commutation haute fréquence du deuxième convertisseur primaire de compensation étant configurés pour charger ou décharger le deuxième condensateur de stockage en fonction de la consigne de puissance instantanée égale à un premier seuil de puissance constant.

De préférence, le convertisseur de puissance électrique primaire comprend un troisième étage de commutation haute fréquence, le transformateur auquel est relié le convertisseur de puissance électrique primaire est de type triphasé et comprend trois plots de puissance, un plot de flux libre, trois bobines primaires bobinées chacune autour d'un plot de puissance différent et reliée à un étage de commutation haute fréquence différent, et trois bobines secondaires bobinées chacune autour d'un plot de puissance différent, chaque bobine secondaire étant reliée au convertisseur de puissance électrique secondaire ou à l'un des convertisseurs secondaires de compensation, les plots de puissance étant disposés dans le transformateur de sorte que les inductances mutuelles entre les bobines primaires soient égales, cette condition étant satisfaite par une équidistance des plots de puissance entre eux, et de sorte que le plot de flux libre soit équidistant de chacun des plots de puissance.

L'invention a également pour objet un véhicule automobile comprenant une batterie et un chargeur tel que défini précédemment, la batterie étant reliée au circuit secondaire.

L'invention a également pour objet un procédé d'échange d'énergie électrique entre une batterie pour véhicule automobile et un réseau d'alimentation électrique monophasé reliés à un chargeur de batterie, comprenant la commande d'un convertisseur de puissance électrique primaire et d'un convertisseur de puissance électrique secondaire de manière à transférer la puissance instantanée maximale délivrée par un réseau d'alimentation électrique ou une batterie respectivement à la batterie ou au réseau d'alimentation électrique.

Le procédé comprend :

- la commutation d'un condensateur de stockage commutable disposé en parallèle d'un condensateur de filtrage entre deux bornes d'entrée d'un étage de commutation haute fréquence d'au moins un convertisseur de puissance électrique primaire de compensation du chargeur de sorte que le condensateur de stockage soit relié aux deux bornes d'entrée, et
- la commande d'au moins un convertisseur de puissance électrique secondaire de compensation du chargeur relié au convertisseur de puissance primaire de compensation par l'intermédiaire d'un transformateur du chargeur et la commande de l'étage de commutation haute fréquence du convertisseur primaire de compensation pour charger ou décharger les condensateurs de stockage et de filtrage en fonction d'une consigne de puissance instantanée.

Selon une caractéristique, le procédé comprend en outre :

- la commutation d'un deuxième condensateur de stockage commutable d'un deuxième convertisseur de puissance électrique primaire de compensation de sorte que le deuxième condensateur de stockage soit relié aux deux bornes d'entrée d'un deuxième étage de commutation haute fréquence du deuxième convertisseur de puissance électrique primaire de compensation, et
- la commande d'un deuxième convertisseur de puissance électrique secondaire de compensation relié au convertisseur de puissance électrique primaire de compensation par l'intermédiaire du transformateur et la commande du deuxième étage de commutation haute fréquence du deuxième convertisseur primaire de compensation pour charger ou décharger le deuxième condensateur de stockage en fonction du de la consigne de puissance instantanée.

De préférence, le convertisseur de puissance électrique primaire comprend un troisième étage de commutation haute fréquence, et le transformateur est de type triphasé et comprend trois plots de puissance, un plot de flux libre, trois bobines primaires bobinées chacune autour d'un plot de puissance différent et reliée à un étage de commutation haute fréquence différent, et trois bobines secondaires bobinées chacune autour d'un plot de puissance différent, chaque bobine secondaire étant reliée au convertisseur de puissance électrique secondaire ou à l'un des convertisseurs secondaires de compensation, les plots de puissance étant disposés dans le transformateur de sorte que les inductances mutuelles entre les bobines primaires soient égales, cette condition étant satisfaite par une équidistance des plots de puissance entre eux, et de sorte que le plot de flux libre soit équidistant de chacun des plots de puissance.

Avantageusement, lorsque la puissance instantanée délivrée par le réseau d'alimentation électrique monophasé est supérieure à la consigne de puissance instantanée égale à un premier seuil de puissance, chaque convertisseur de puissance électrique secondaire de compensation et l'étage de commutation haute fréquence de chaque convertisseur primaire de compensation sont commandés pour charger chaque condensateur de stockage commutable et chaque condensateur de filtrage.

De préférence, lorsque la puissance instantanée délivrée par le réseau d'alimentation électrique monophasé est inférieure à la consigne de puissance instantanée égale à un premier seuil de puissance, chaque convertisseur de puissance électrique secondaire de compensation et l'étage de commutation haute fréquence de chaque convertisseur de puissance électrique primaire de compensation sont commandés pour décharger chaque condensateur de stockage commutable et chaque condensateur de filtrage.

Avantageusement, lequel lorsque la puissance instantanée délivrée par la batterie est supérieure à la consigne de puissance instantanée égale à un premier seuil de puissance, chaque convertisseur de puissance électrique secondaire de compensation et l'étage de commutation haute fréquence de chaque convertisseur de puissance électrique primaire de compensation sont commandés pour charger chaque condensateur de stockage commutable et chaque condensateur de filtrage de sorte que la puissance électrique instantanée reçue par le réseau électrique monophasé soit égale au deuxième seuil de puissance.

De préférence, lorsque la puissance instantanée délivrée par la batterie est inférieure au seuil de puissance égal à un premier seuil de puissance, chaque convertisseur de puissance électrique secondaire de compensation et l'étage de commutation haute fréquence de chaque convertisseur de puissance électrique primaire de compensation sont commandés pour décharger chaque condensateur de stockage commutable et chaque condensateur de filtrage.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1], dont il a déjà été fait mention, illustre schématiquement un chargeur de batterie selon l'état de la technique ;
[Fig 2], dont il a déjà été fait mention, illustre schématiquement un convertisseur de puissance électrique primaire selon l'état de la technique ;
[Fig 3] illustre schématiquement un mode de réalisation d'un chargeur de batterie selon l'invention ;
[Fig 4] illustre schématiquement un exemple d'évolution temporelle de la puissance instantanée délivrée par le réseau monophasé
[Fig 5] illustre un exemple d'évolution temporelle de la tension aux bornes des condensateurs de stockage selon l'invention ;
[Fig 6] illustre un exemple d'évolution temporelle de l'énergie échangée par les condensateurs de stockage selon l'invention ;
[Fig 7] illustre un exemple d'échanges de puissance électrique instantanée entre les différents éléments du chargeur selon l'invention ;
[Fig 8] et
[Fig 9] illustrent un exemple de boucles de régulation du chargeur selon l'invention, et
[Fig 10] illustre schématiquement un mode de réalisation du transformateur triphasé.

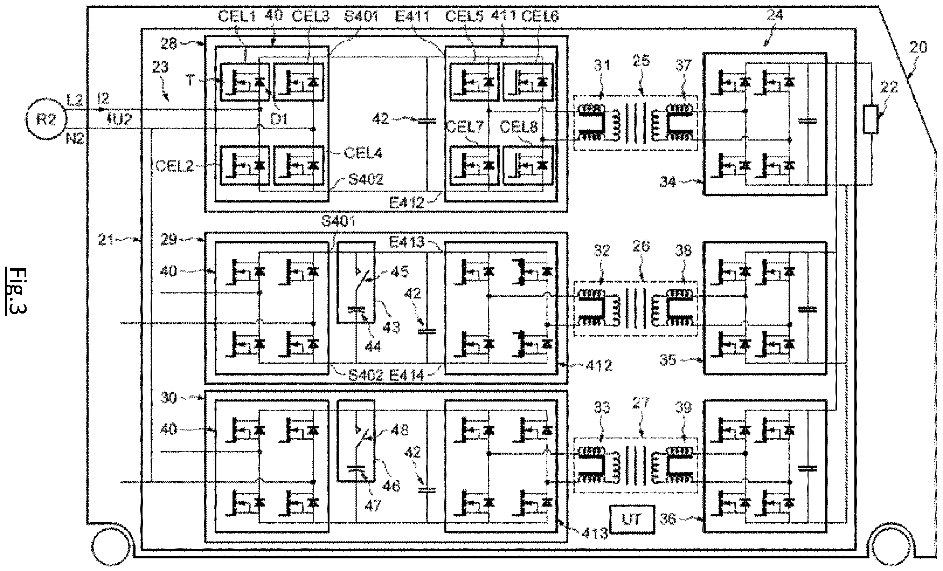

La figure 3 illustre un réseau électrique R2 monophasé délivrant par exemple 16 ampères ou 32 ampères sur sa phase L2, et un véhicule automobile 20 hybride ou électrique comprenant un premier mode de réalisation d'un chargeur réversible 21 de batteries, alimenté par le réseau électrique R2, pour recharger ou décharger une batterie 22 reliée au chargeur 21.

On suppose dans ce qui suit que le réseau R2 délivre un courant 12 d'intensité moyenne de 16 ampères et une tension U2 sinusoïdale de valeur efficace 250 volts.

En variante, l'énergie contenue dans la batterie 22 est délivrée par le chargeur 21 au réseau R2

Le chargeur 21 comprend un circuit primaire 23 relié au réseau R2 et un circuit secondaire 24 relié au circuit primaire 23 par l'intermédiaire d'un transformateur comprenant trois transformateurs monophasés 25, 26 et 27, et une unité de traitement UT.

Le circuit primaire 23 comprend un convertisseur de puissance électrique primaire 28 et deux convertisseurs primaires de compensation 29, 30, le convertisseur primaire 28 étant relié en entrée à la phase L2 du réseau R1, et le convertisseur primaire et les convertisseurs primaires de compensation étant reliés en entrée au neutre N2 du réseau R2.

Le convertisseur de puissance électrique primaire 28 et chaque convertisseur de puissance électrique primaire de compensation (correspondant aux convertisseurs utilisés sur les deux autres phases d'alimentation lors d'une charge triphasée) 29, 30 sont reliés en sortie à une bobine primaire respective 31, 32, 33 alimentée par le convertisseur de puissance électrique primaire respectif 28, 29, 30, chaque bobine primaire formant un enroulement primaire d'un transformateur monophasé 25, 26, 27.

Le premier circuit secondaire 24 comprend un convertisseur de puissance secondaire 34, un premier et un deuxième convertisseurs de puissance secondaire de compensation 35, 36, le convertisseur de puissance secondaire 34 étant relié au convertisseur primaire 28 par l'intermédiaire d'une première bobine secondaire 37, un premier convertisseur secondaire de compensation 35 étant relié à un premier convertisseur primaire de compensation 29 par l'intermédiaire d'une deuxième bobine secondaire 38 et le deuxième convertisseur secondaire de compensation 36 étant relié au deuxième convertisseur primaire de compensation 30 par l'intermédiaire d'une troisième bobine secondaire 39, chaque convertisseur de puissance secondaire 34, 35, 36 étant en outre relié à la batterie 22.

Les bobines secondaire 37, 38, 39 forment respectivement un enroulement secondaire des transformateurs monophasés 25, 26, 27 sans couplage magnétique avec le primaire.

Le convertisseur de puissance électrique secondaire 34 et les convertisseurs de puissance électriques secondaires 35, 36 sont d'architecture identique du type réversible et sont par exemple réalisés à partir de diodes et de transistors.

Les convertisseurs de puissance électriques primaires et secondaires sont pilotés par l'unité de traitement UT selon un mode de commutation de type commutation à tension nulle connue par l'homme du métier sous les termes anglo-saxons « Zéro Voltage Switching » ZVS ou commutation douce réduisant les pertes de commutation.

Le chargeur 21 charge la batterie 22 à partir du réseau R2.

Le convertisseur primaire 28 comprend un étage de commutation basse fréquence 40 relié en entrée au réseau d'alimentation électrique R2, un étage de commutation haute fréquence 411 relié en sortie au premier transformateur 25, et un condensateur de filtrage 42 réalisé par exemple à base de films métallisés plastiques.

L'étage de commutation basse fréquence 40 comporte deux bornes de connexion S401, S402 reliées chacune à une borne d'entrée E411, E412 différente de l'étage de commutation haute fréquence 411.

Le condensateur de filtrage 42 est relié entre les deux bornes de connexion S401, S402 de l'étage de commutation basse fréquence 40.

L'étage de commutation basse fréquence 40 comprend quatre cellules de commutation CEL1 à CEL4 basse fréquence identiques comportant chacune un transistor unipolaire T comprenant une diode de roue libre D1.

Une entrée d'une première cellule CEL1 basse fréquence et une sortie d'une deuxième cellule CEL2 basse fréquence sont reliées à la phase L2.

Une entrée d'une troisième cellule CEL3 basse fréquence et une sortie de la quatrième cellule CEL4 basse fréquence sont reliées au neutre N2.

Une sortie de la première cellule CEL1 et de la troisième cellule CEL3 sont reliées à une première borne de connexion S401.

Une entrée de la deuxième cellule CEL2 et de la quatrième cellule CEL4 sont reliées à la deuxième borne de connexion S402.

Les cellules CEL1 à CEL4 de l'étage de commutation basse fréquence 40 fonctionnent à basse fréquence, la fréquence de commutation étant égale à celle du réseau R2 par exemple 50 Hz.

L'étage de commutation basse fréquence 40 redresse la tension délivrée par le réseau R2 et le condensateur de filtrage 42, de faible valeur (par exemple $10\mu F$) permet de réduire l'impédance de la boucle de commutation des convertisseurs 40 et 411, de sorte que l'étage de commutation haute fréquence 411 reçoit en entrée une tension unipolaire permettant de réaliser l'étage de commutation haute fréquence à partir de composants unipolaires.

L'étage de commutation haute fréquence 411 comprend quatre cellules de commutation CEL5 à CEL8 haute fréquence identiques comportant chacune un transistor unipolaire associé à une diode de roue libre.

Une sortie d'une cinquième cellule CEL5 et d'une sixième cellule CEL6 sont reliées à une première borne d'entrée E411 de l'étage de commutation haute fréquence 411.

Une entrée d'une septième cellule CEL7 et de la huitième cellule CEL8 sont reliées à la deuxième borne d'entrée E412 de l'étage de commutation haute fréquence 411.

Une entrée de la cinquième cellule CEL5 et une sortie de la septième cellule CEL7 sont reliées à une première extrémité de la bobine 31, et une entrée de la sixième cellule CEL6 et une sortie de la huitième cellule CEL8 sont reliées à la deuxième extrémité de la bobine 31.

Les cellules CEL5 à CEL8 de l'étage de commutation haute fréquence 411 fonctionnent à haute fréquence, par exemple à 150 KHz.

Le convertisseur primaire 28 et le convertisseur secondaire 34 reliés par un premier transformateur monophasé 25 sont pilotés par l'unité de traitement UT de manière à transférer la puissance instantanée maximale délivrée par le réseau d'alimentation électrique R2 à la batterie 22.

L'unité de traitement UT délivre par exemple à chaque convertisseur 34, 411 une tension rectangulaire comprenant un rapport cyclique de 0.5, et pilote le déphasage entre les deux tensions rectangulaires.

Le premier convertisseur primaire de compensation 29 comprend l'étage de commutation basse fréquence 40 relié à un deuxième étage de commutation haute fréquence 412 et le condensateur de filtrage 42 agencé comme dans le premier convertisseur 28.

L'architecture du deuxième étage de commutation haute fréquence 412 est identique à celle du premier étage de commutation haute fréquence 411, le deuxième étage 412 comportant des première borne d'entrée E413 et deuxième borne d'entrée E414.

Le premier convertisseur primaire de compensation 29 comprend en outre un premier condensateur de stockage commutable 43 comprenant un premier condensateur de stockage 44 et un premier interrupteur 45 relié à une première extrémité du condensateur 44 et à l'une des bornes de connexion S401, S402 de l'étage de commutation basse fréquence 40, la deuxième extrémité du condensateur de stockage 44 étant reliée à l'autre borne de connexion S402, S401 de l'étage de commutation basse fréquence 40.

Le premier condensateur de stockage 44 peut être du même type que le condensateur de filtrage 42 ou du type condensateur électrolytique pour augmenter la densité d'énergie stocké du condensateur de stockage 44.

Le deuxième convertisseur primaire de compensation 30 est d'architecture identique au premier convertisseur 29 et comprend un deuxième condensateur de stockage commutable 46 comportant un deuxième condensateur de stockage 47, un deuxième interrupteur 48, et un troisième étage de commutation haute fréquence 413 d'architecture identique à celle du deuxième étage de commutation haute fréquence 412.

Les capacités C44 et C47 des premier et deuxième condensateurs de stockage 44, 47 peuvent être identiques ou différentes.

On suppose dans ce qui suit que les premier et deuxième condensateurs de stockage 44, 47 sont identiques.

Comme le chargeur 21 charge la batterie 22 à partir du réseau électrique R2 monophasé, les interrupteurs 45, 48 sont commutés par l'unité de traitement UT de sorte que les condensateurs de stockage 44, 47 connectent les bornes S401, S402 des étages de commutation basse fréquence 40.

L'unité de traitement UT pilote les premier et deuxième convertisseurs secondaires de compensation 35, 36, et les premier et deuxième convertisseurs primaires de compensation 29, 30 de manière à charger ou décharger les condensateurs de stockage 44, 47 et de filtrage 42 de sorte que la puissance électrique instantanée reçue ou fournie par la batterie 22 soit constante et égale à un premier seuil de puissance Sp égal par exemple à la puissance moyenne délivrée par le réseau monophasé R2, par exemple 4000 watt lorsque le réseau R2 délivre en moyenne 16 ampères efficaces et 250 volts.

Les premier et deuxième convertisseurs secondaires de compensation 35, 36, les premier et deuxième convertisseurs primaires de compensation 29, 30, les condensateurs de stockage 44, 47 et les condensateurs de filtrage 42 formant un dispositif de compensation, compensent des pulsations de puissance à la fréquence double de celle du réseau monophasé R2.

La capacité additionnelle Cadd égale à la somme des capacités minimales Cmin44 et Cmin47 des premier et deuxième condensateurs de stockage 44, 47 est déterminée de sorte que les premier et deuxième condensateurs de stockage 44, 47 compensent les variations de puissance instantanées au-dessus ou en dessous du seuil de puissance Sp.

Les capacités minimales Cmin44 et Cmin47 des premier et deuxième condensateurs de stockage 44, 47 sont déterminées de sorte que :

$$Cadd \geq Cmin44 + Cmin47 = 2 \cdot \frac{Emax}{V_1^2} - 2 \cdot C42 \qquad (1)$$

où Vi est la tension maximale admissible par les condensateurs du chargeur 21 et les transistors du chargeur 21 et Emax est l'énergie maximale échangée lorsque le courant et la tension délivrés par le réseau R2 ont atteint leur valeur la plus élevée.

En variante, le deuxième convertisseur primaire de compensation 30 ne comprend pas le deuxième condensateur de stockage commutable 46, le deuxième convertisseur 30 ayant la même architecture que le premier convertisseur primaire 28. L'unité de traitement UT pilote alors le premier convertisseur secondaire de compensation 35 et le premier convertisseur primaire de compensation 29 de manière à charger ou décharger le condensateur de stockage 44 du premier convertisseur primaire de compensation 29 de sorte que la puissance électrique instantanée reçue par la batterie 22 soit constante et égale au seuil de puissance Sp, la capacité minimale Cmin44 du premier condensateur de stockage 44, étant égale à :

$$Cmin44 = 2 \cdot \frac{Emax}{V_1^2} - C42 \quad (2)$$

, la capacité de stockage additionnel Cadd étant égale à Cmin44.

Lorsque le réseau R2 délivre 16 ampères, la capacité additionnelle Cadd est par exemple égale à 160 μF, et à 320 μF lorsque le réseau R2 délivre 32 ampères.

Le dispositif de compensation comprend les convertisseurs primaire et secondaire de compensation qui ne sont pas reliés à la phase du réseau monophasé R2 (phase libre), lesdits convertisseurs étant pilotés en mode ZVS afin de rendre le rendement du dispositif de compensation élevé.

De plus, comme le dispositif de compensation nécessite uniquement l'ajout d'au moins un condensateur de stockage commutable 43 par rapport à un chargeur de l'état de la technique, l'encombrement du chargeur 21 est sensiblement équivalent à un chargeur de l'état de la technique ne comprenant pas de dispositif de compensation de pulsations.

Selon un autre mode de réalisation, le chargeur 21 transfert l'énergie électrique de la batterie 22 vers le réseau R2 en mettant en oeuvre le dispositif de compensation.

Lorsque le chargeur 21 est relié à un réseau triphasé, les interrupteurs 45, 48 sont ouverts, le convertisseur primaire 28 et chaque convertisseur primaire de compensation 29 et 30 étant relié à une phase différente du réseau triphasé et au neutre du réseau triphasé, l'unité de traitement UT pilotant les convertisseurs primaires et secondaires pour charger la batterie 22 à partir du réseau triphasé. Comme la puissance électrique échangée par le réseau triphasé est constante, le dispositif de compensation peut être désactivé.

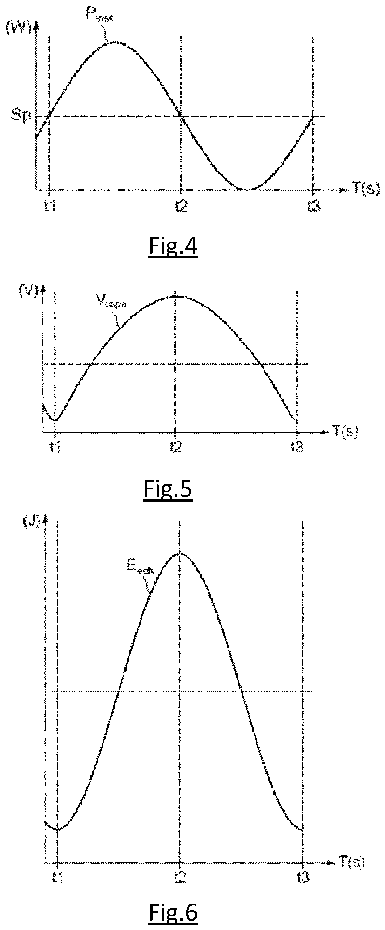

Les figures 4, 5, 6 et 7 illustrent un exemple d'un procédé d'échange d'énergie électrique entre la batterie 22 et le réseau d'alimentation électrique monophasé R2 mettant en oeuvre le chargeur 21.

On suppose que le chargeur 21 charge la batterie 22 à partir du réseau R2 relié au convertisseur primaire 28 et comprend les deux condensateurs de stockage 44, 47 reliés entre les bornes des étages de commutation basse fréquence.

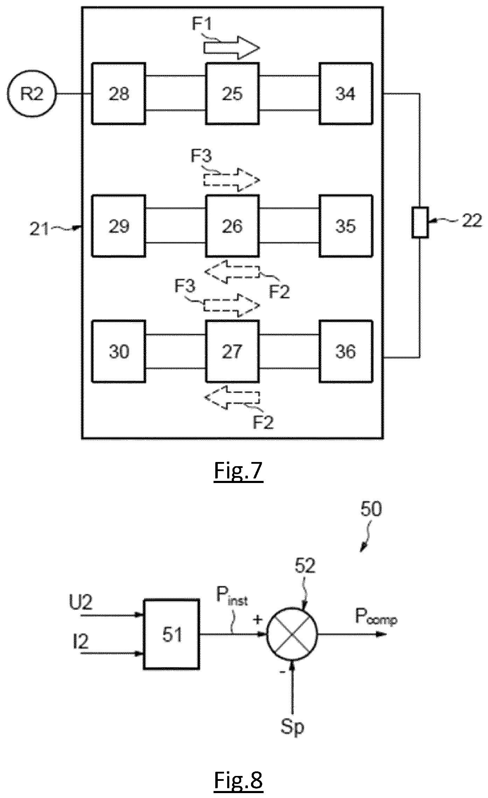

La figure 4 illustre un exemple d'évolution temporelle de la puissance instantanée Pinst délivrée par le réseau R2, la figure 5 illustre un exemple d'évolution temporelle de la tension Vcapa aux bornes des condensateurs de stockage 44, 47, la figure 6 illustre l'évolution temporelle de l'énergie échangée Eech par les condensateurs de stockage 44, 47, et la figure 7 illustre un exemple d'échanges de puissance électrique instantanée entre les différents éléments du chargeur 21.

Le convertisseur primaire 28 et le convertisseur secondaire 34 transfèrent la puissance instantanée délivrée par le réseau R2 (flèche F1 sur la figure 7) vers la batterie 22.

A partir de l'instant t1, la puissance instantanée Pinst est supérieure à un seuil de puissance égal au premier seuil de puissance Sp.

Les premier et deuxième convertisseurs secondaires de compensation 35 et 36, et les deuxième et troisième étages de commutation haute fréquence 412, 413 des premier et deuxième convertisseurs primaires de compensation 29, 30 chargent les premier et deuxième condensateurs de stockage de sorte que la puissance électrique instantanée reçue par la batterie 22 soit égale au premier seuil de puissance Sp.

La puissance instantanée excédant le seuil Sp est transférée vers les condensateurs de stockage (flèches F2 sur la figure 7).

On note Pcomp la puissance instantanée de compensation égale à la puissance électrique instantanée excédant le premier seuil de puissance Sp chargée dans les condensateurs de stockage.

Les condensateurs de stockage stockent l'énergie (figure 6) excédentaire.

La tension aux bornes des condensateurs de stockage augmente (figure 5).

A partir de l'instant t2, la puissance instantanée Pinst devient inférieure au premier seuil de puissance Sp.

Les premier et deuxième convertisseurs secondaires de compensation 35 et 36, et les deuxième et troisième étages de commutation haute fréquence 412, 413 des premier et deuxième convertisseurs primaires de compensation 29, 30 déchargent les premier et deuxième condensateurs de stockage de sorte que la puissance électrique instantanée reçue par la batterie 22 soit égale au premier seuil de puissance Sp.

Les condensateurs de stockage se déchargent et libèrent l'énergie (figure 6) excédentaire stockée précédemment.

La puissance instantanée libérée est transférée vers la batterie 22 par l'intermédiaire des premier et deuxième convertisseurs secondaires de compensation 35, 36 (flèches F3 sur la figure 7).

La batterie 22 reçoit une puissance instantanée de charge constante égale au premier seuil indépendamment des variations de puissance du réseau R2.

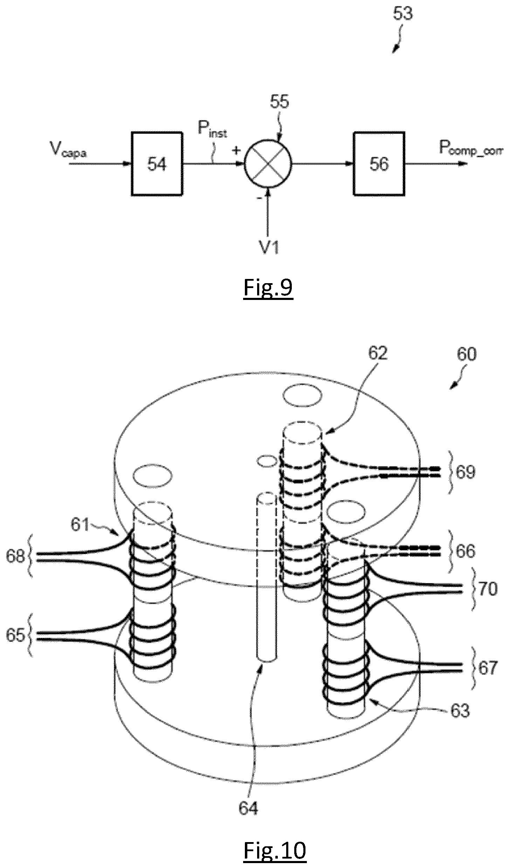

Les figures 8 et 9 illustrent un exemple de boucles de régulation du dispositif de compensation mis en oeuvre par l'unité de traitement UT.

Une première boucle de régulation 50 détermine la puissance instantanée de compensation Pcomp (figure 8) et une deuxième boucle de régulation 51 (figure 9) corrige la puissance instantanée de compensation Pcomp déterminée par la première boucle 50 pour asservir et stabiliser la tension de crête aux bornes des premier et deuxième condensateurs de stockage, de sorte que ladite tension n'excède pas la tension maximale admissible $V_1$.

La première boucle 50 comprend un multiplicateur 51 déterminant la puissance instantanée Pinst en multipliant la tension U2 par l'intensité I2, et un premier comparateur 52 comparant la puissance instantanée Pinst à une consigne de puissance instantanée égale au premier seuil de puissance Sp, la puissance instantanée de compensation Pcomp étant égale à la différence entre la puissance instantanée Pinst et le premier seuil de puissance Sp.

La deuxième boucle 53 comprend un dispositif de détection de tension de crête 54 recevant en entrée la tension Vcapa aux bornes des premier et deuxième condensateurs de stockage, un deuxième comparateur 55 comparant la tension de crête déterminée par le dispositif 54 à la tension maximale admissible $V_1$, et un régulateur 56 corrigeant la puissance instantanée de compensation Pcomp pour délivrer la puissance instantanée de compensation corrigé Pcom_corr.

En variante, l'énergie contenue dans la batterie 22 est délivrée par le chargeur 21 au réseau R2, les phases de charge et de décharge des condensateurs de stockage 44, 47 étant inversées, le seuil de puissance reste égal au seuil de puissance correspondant à la puissance moyenne reçue par le réseau R2 par exemple égale à 4000 watt pour 16 ampères efficaces renvoyés lorsque le réseau est à 250 V efficaces.

La figure 10 illustre un deuxième mode de réalisation du transformateur reliant les circuit primaire et secondaire du chargeur 21.

Le transformateur comprend un transformateur triphasé 60 comprenant trois plots de puissance 61, 62, 63, un plot de flux libre 64, trois bobines primaires 65, 66, 67 bobinées respectivement autour des plots de puissance 61, 62, 63, et trois bobines secondaire 68, 69, 70 bobinées respectivement autour des plots de puissance 61, 62, 63.

Les bobines primaires 65, 66, 67 sont en outre respectivement reliées aux étages de commutation haute fréquence du convertisseur de puissance primaire 28, des premier et deuxième convertisseurs primaire de compensation 29, 30, et les bobines secondaires 68, 69, 70 sont respectivement reliées au convertisseur de puissance secondaire 34, aux premier et deuxième convertisseurs de puissance secondaire de compensation 35, 36.

Les plots de puissance 61, 62, 63 sont disposés dans le transformateur triphasée 60 de sorte que les inductances mutuelles entre les bobines primaires 65, 66, 67 soient égales, cette condition étant satisfaite par une équidistance des plots de puissance entre eux, et de sorte que le plot de flux libre 64 soit équidistant de chacun des plots de puissance.

En variante, l'égalité des inductances mutuelles peut être obtenue par des changements de propriétés magnétiques du matériau du transformateur.

Le transformateur comprenant le transformateur triphasé 60 permet de réduire l'encombrement du transformateur et ainsi de réduire encore plus l'encombrement du chargeur 21 par rapport au mode de réalisation du transformateur comprenant les trois transformateurs monophasés 25, 26, 27.

L'encombrement du transformateur triphasé 60 est deux fois moindre que l'encombrement global des trois transformateurs monophasés 25, 26, 27.

En outre, le transformateur triphasé 60 permet d'améliorer le rendement du chargeur 21 en réduisant les pertes magnétiques du fait de son moindre volume.

Lorsque le chargeur 21 comprend les deux condensateurs commutables de stockage et est relié au réseau monophasé R2, les étages de commutation haute fréquence des premier et deuxième convertisseurs de puissance primaire de compensation 29, 30 sont commandés en opposition de phase de manière à limiter le flux magnétique généré dans le circuit magnétique du transformateur triphasé 60 pour réduire encore plus les pertes magnétiques.

Lorsque le chargeur 21 est relié à un réseau triphasé, le plot de flux libre 64 permet d'équilibrer les flux magnétiques des trois plots de puissance 61, 62, 63.

## Revendications

**1.** Chargeur de batterie (21) pour véhicule automobile (20), comprenant un convertisseur de puissance électrique primaire (28) et un convertisseur de puissance électrique secondaire (34) reliés par un transformateur (25, 26, 27, 60), le convertisseur de puissance primaire et le convertisseur de puissance secondaire étant configurés pour transférer la puissance instantanée maximale délivrée par un réseau d'alimentation électrique (R2) ou une batterie (22) respectivement à la batterie ou au réseau d'alimentation électrique, **caractérisé en ce que** le chargeur comprend :

• au moins un convertisseur de puissance électrique primaire de compensation (29) comportant un étage de commutation haute fréquence (412) relié en sortie au transformateur,
• un condensateur de filtrage (42) relié entre deux bornes d'entrée de l'étage de commutation haute fréquence du convertisseur primaire de compensation,
• au moins un convertisseur de puissance électrique secondaire de compensation (35) relié au convertisseur primaire de compensation par l'intermédiaire d'un transformateur (25, 26, 27, 60), et

• un condensateur de stockage commutable (43) relié entre les deux bornes d'entrée de l'étage de commutation haute fréquence du convertisseur primaire de compensation (29),
• le convertisseur de puissance électrique secondaire de compensation (35) et l'étage de commutation haute fréquence du convertisseur primaire de compensation étant configurés pour charger ou décharger le condensateur de stockage en fonction d'une consigne de puissance instantanée.

2. Chargeur selon la revendication 1, comprenant en outre un deuxième condensateur de stockage commutable (46) relié entre les deux bornes d'entrée d'un deuxième étage de commutation haute fréquence (413) d'un deuxième convertisseur de puissance électrique primaire de compensation (30), et un deuxième convertisseur de puissance électrique secondaire de compensation (36) relié au deuxième convertisseur primaire de compensation par l'intermédiaire d'un transformateur (25, 26, 27, 60), le deuxième convertisseur secondaire de compensation et le deuxième étage de commutation haute fréquence du deuxième convertisseur primaire de compensation étant configurés pour charger ou décharger le deuxième condensateur de stockage en fonction de la consigne de puissance instantanée égale à un premier seuil de puissance (Sp) constant.

3. Chargeur selon la revendication 2, dans lequel le convertisseur de puissance électrique primaire (28) comprend un troisième étage de commutation haute fréquence (411), le transformateur auquel est relié le convertisseur de puissance électrique primaire est de type triphasé (60) et comprend trois plots de puissance (61, 62, 63), un plot de flux libre (64), trois bobines primaires (65, 66, 67) bobinées chacune autour d'un plot de puissance différent et reliée à un étage de commutation haute fréquence (411, 412, 413) différent, et trois bobines secondaires (68, 69, 70) bobinées chacune autour d'un plot de puissance différent, chaque bobine secondaire étant reliée au convertisseur de puissance électrique secondaire (34) ou à l'un des convertisseurs secondaires de compensation (35, 36), les plots de puissance étant disposés dans le transformateur de sorte que les inductances mutuelles entre les bobines primaires soient égales, cette condition étant satisfaite par une équidistance des plots de puissance entre eux, et de sorte que le plot de flux libre soit équidistant de chacun des plots de puissance.

4. Véhicule automobile (20) comprenant une batterie (22) et un chargeur (21) selon l'une quelconque des revendications 1 à 3, la batterie étant reliée au circuit secondaire (24).

5. Procédé d'échange d'énergie électrique entre une batterie (22) pour véhicule automobile (20) et un réseau d'alimentation électrique monophasé (R2) reliés à un chargeur de batterie (21), comprenant la commande d'un convertisseur de puissance électrique primaire (28) et d'un convertisseur de puissance électrique secondaire (34) de manière à transférer la puissance instantanée maximale délivrée par un réseau d'alimentation électrique (R2) ou une batterie (22) respectivement à la batterie ou au réseau d'alimentation électrique **caractérisé en ce que** le procédé comprend :

   • la commutation d'un condensateur de stockage commutable (43) disposé en parallèle d'un condensateur de filtrage (42) entre deux bornes d'entrée (E411, E412) d'un étage de commutation haute fréquence (412) d'au moins un convertisseur de puissance électrique primaire de compensation (29) du chargeur de sorte que le condensateur de stockage soit relié aux deux bornes d'entrée, et
   • la commande d'au moins un convertisseur de puissance électrique secondaire de compensation (35) du chargeur relié au convertisseur de puissance primaire de compensation par l'intermédiaire d'un transformateur (25, 26, 27, 50) du chargeur et la commande de l'étage de commutation haute fréquence du convertisseur primaire de compensation pour charger ou décharger les condensateurs de stockage et de filtrage en fonction d'une consigne de puissance instantanée.

6. Procédé selon la revendication 5, comprenant en outre :

   • la commutation d'un deuxième condensateur de stockage commutable (46) d'un deuxième convertisseur de puissance électrique primaire de compensation (30) de sorte que le deuxième condensateur de stockage soit relié aux deux bornes d'entrée de d'un deuxième étage de commutation haute fréquence (413) du deuxième convertisseur de puissance électrique primaire de compensation, et
   • la commande d'un deuxième convertisseur de puissance électrique secondaire de compensation (36) relié au convertisseur de puissance électrique primaire de compensation par l'intermédiaire du transformateur (25, 26, 27, 60) et la commande du deuxième étage de commutation haute fréquence du deuxième convertisseur primaire de compensation pour charger ou décharger le deuxième condensateur de stockage en fonction du de la consigne de puissance instantanée.

**7.** Procédé selon l'une quelconque des revendications 5 et 6, le convertisseur de puissance électrique primaire (28) comprenant un troisième étage de commutation haute fréquence (411), dans lequel le transformateur est de type triphasé (60) et comprend trois plots de puissance (61, 62, 63), un plot de flux libre (64), trois bobines primaires (65, 66, 67) bobinées chacune autour d'un plot de puissance différent et reliée à un étage de commutation haute fréquence (411, 412, 413) différent, et trois bobines secondaires (68, 69, 70) bobinées chacune autour d'un plot de puissance différent, chaque bobine secondaire étant reliée au convertisseur de puissance électrique secondaire (34) ou à l'un des convertisseurs secondaires de compensation (35, 36), les plots de puissance étant disposés dans le transformateur de sorte que les inductances mutuelles entre les bobines primaires (15, 16, 17) soient égales, cette condition étant satisfaite par une équidistance des plots de puissance entre eux, et de sorte que le plot de flux libre soit équidistant de chacun des plots de puissance.

**8.** Procédé selon l'une quelconque des revendications 5 à 7, dans lequel lorsque la puissance instantanée délivrée par le réseau d'alimentation électrique monophasé (R2) est supérieure à la consigne de puissance instantanée égale à un premier seuil de puissance (Sp), chaque convertisseur de puissance électrique secondaire de compensation (35, 36) et l'étage de commutation haute fréquence (412, 413) de chaque convertisseur primaire de compensation (29, 30) sont commandés pour charger chaque condensateur de stockage commutable (43, 46) et chaque condensateur de filtrage (42).

**9.** Procédé selon l'une quelconque des revendications 5 à 8, dans lequel lorsque la puissance instantanée délivrée par le réseau d'alimentation électrique monophasé (R2) est inférieure à la consigne de puissance instantanée égale à un premier seuil de puissance (Sp), chaque convertisseur de puissance électrique secondaire de compensation (35, 36) et l'étage de commutation haute fréquence (412, 413) de chaque convertisseur de puissance électrique primaire de compensation (29, 30) sont commandés pour décharger chaque condensateur de stockage commutable (43, 46) et chaque condensateur de filtrage (42).

**10.** Procédé selon l'une quelconque des revendications 5 à 7, dans lequel lorsque la puissance instantanée délivrée par la batterie (22) est supérieure à la consigne de puissance instantanée égale à un premier seuil de puissance (Sp), chaque convertisseur de puissance électrique secondaire de compensation (35, 36) et l'étage de commutation haute fréquence (412, 413) de chaque convertisseur de puissance électrique primaire de compensation (29, 30) sont commandés pour charger chaque condensateur de stockage commutable (43, 46) et chaque condensateur de filtrage (42) de sorte que la puissance électrique instantanée reçue par le réseau électrique monophasé soit égale au deuxième seuil de puissance.

**11.** Procédé selon l'une quelconque des revendications 5 à 7 et 10, dans lequel lorsque la puissance instantanée délivrée par la batterie (22) est inférieure au seuil de puissance égal à un premier seuil de puissance (Sp), chaque convertisseur de puissance électrique secondaire de compensation (35, 36) et l'étage de commutation haute fréquence (412, 413) de chaque convertisseur de puissance électrique primaire de compensation (29, 30) sont commandés pour décharger chaque condensateur de stockage commutable (43, 46) et chaque condensateur de filtrage (42).

**Patentansprüche**

**1.** Batterieladegerät (21) für ein Kraftfahrzeug (20), mit einem primären elektrischen Leistungswandler (28) und einem sekundären elektrischen Leistungswandler (34), die durch einen Transformator (25, 26, 27, 60) verbunden sind, wobei der primäre Leistungswandler und der sekundäre Leistungswandler so konfiguriert sind, dass sie die maximale Momentanleistung, die von einem Stromversorgungsnetz (R2) oder einer Batterie (22) geliefert wird, jeweils auf die Batterie oder das Stromversorgungsnetz übertragen, **dadurch gekennzeichnet, dass** das Ladegerät Folgendes aufweist:

- mindestens einen primären elektrischen Leistungswandler zur Kompensation (29) mit einer Hochfrequenzschaltstufe (412), die am Ausgang mit dem Transformator verbunden ist,
- einen Filterkondensator (42), der zwischen zwei Eingangsanschlüssen der Hochfrequenzschaltstufe des primären Wandlers zur Kompensation geschaltet ist,
- mindestens einen sekundären elektrischen Leistungswandler zur Kompensation (35), der über einen Transformator (25, 26, 27, 60) mit dem primären Wandler zur Kompensation verbunden ist, und
- einen schaltbaren Speicherkondensator (43), der zwischen die beiden Eingangsanschlüsse der Hochfrequenzschaltstufe des primären Wandlers zur Kompensation (29) geschaltet ist,

• wobei der sekundäre elektrische Leistungswandler zur Kompensation (35) und die Hochfrequenzschaltstufe des primären Wandlers zur Kompensation so konfiguriert sind, dass sie den Speicherkondensator in Abhängigkeit von einem momentanen Leistungssollwert laden oder entladen.

2. Ladegerät nach Anspruch 1, das darüber hinaus einen zweiten schaltbaren Speicherkondensator (46) aufweist, der zwischen die beiden Eingangsanschlüsse einer zweiten Hochfrequenzschaltstufe (413) eines zweiten primären elektrischen Leistungswandlers zur Kompensation (30) geschaltet ist, und einen zweiten sekundären elektrischen Leistungswandler zur Kompensation (36), der mit dem zweiten primären Leistungswandler zur Kompensation über einen Transformator (25, 26, 27, 60) verbunden ist, wobei der zweite sekundäre Wandler zur Kompensation und die zweite Hochfrequenzschaltstufe des zweiten primären Wandlers zur Kompensation so konfiguriert sind, dass sie den zweiten Speicherkondensator in Abhängigkeit von dem momentanen Leistungssollwert, der gleich einer konstanten ersten Leistungsschwelle (Sp) ist, laden oder entladen.

3. Ladegerät nach Anspruch 2, wobei der primäre elektrische Leistungswandler (28) eine dritte Hochfrequenzschaltstufe (411) aufweist, der Transformator, mit dem der primäre elektrische Leistungswandler verbunden ist, vom Typ dreiphasig (60) ist und drei Leistungsschenkel (61, 62, 63), einen Schenkel für freien Fluss (64), drei Primärspulen (65, 66, 67), die jeweils um einen anderen Leistungsschenkel gewickelt und mit einer anderen Hochfrequenzschaltstufe (411, 412, 413) verbunden sind, und drei Sekundärspulen (68, 69, 70), die jeweils um einen anderen Leistungsschenkel gewickelt sind, aufweist, wobei jede Sekundärspule mit dem sekundären elektrischen Leistungswandler (34) oder einem der sekundären Wandler zur Kompensation (35, 36) verbunden ist, wobei die Leistungsschenkel im Transformator so angeordnet sind, dass die gegenseitigen Induktivitäten zwischen den Primärspulen gleich sind, wobei diese Bedingung durch einen äquidistanten Abstand der Leistungsschenkel zueinander erfüllt wird, und derart, dass der Schenkel für freien Fluss von jedem der Leistungsschenkel äquidistant ist.

4. Kraftfahrzeug (20) mit einer Batterie (22) und einem Ladegerät (21) nach einem der Ansprüche 1 bis 3, wobei die Batterie mit dem Sekundärstromkreis (24) verbunden ist.

5. Verfahren zum Austausch elektrischer Energie zwischen einer Batterie (22) für ein Kraftfahrzeug (20) und einem einphasigen elektrischen Versorgungsnetz (R2), die mit einem Batterieladegerät (21) verbunden sind, das die Steuerung eines primären elektrischen Leistungswandlers (28) und eines sekundären elektrischen Leistungswandlers (34) aufweist, um die maximale momentane Leistung, die von einem elektrischen Versorgungsnetz (R2) oder einer Batterie (22) geliefert wird, jeweils auf die Batterie oder das elektrische Versorgungsnetz zu übertragen, **dadurch gekennzeichnet, dass** das Verfahren Folgendes aufweist:

> • Schalten eines schaltbaren Speicherkondensators (43), der parallel zu einem Filterkondensator (42) zwischen zwei Eingangsanschlüssen (E411, E412) einer Hochfrequenzschaltstufe (412) von mindestens einem primären elektrischen Leistungswandler zur Kompensation (29) des Ladegeräts angeordnet ist, so dass der Speicherkondensator mit den beiden Eingangsanschlüssen verbunden ist, und
> • Steuern mindestens eines sekundären elektrischen Leistungswandlers zur Kompensation (35) des Ladegeräts, der über einen Transformator (25, 26, 27, 50) des Ladegeräts mit dem primären Leistungswandler zur Kompensation verbunden ist, und Steuern der Hochfrequenzschaltstufe des primären Leistungswandlers zur Kompensation, um die Kondensatoren zum Speichern und Filtern in Abhängigkeit von einem momentanen Leistungssollwert zu laden oder zu entladen.

6. Verfahren nach Anspruch 5, das darüber hinaus Folgendes aufweist:

> • Schalten eines zweiten schaltbaren Speicherkondensators (46) eines zweiten primären elektrischen Leistungswandlers zur Kompensation (30), so dass der zweite Speicherkondensator mit den beiden Eingangsanschlüssen einer zweiten Hochfrequenzschaltstufe (413) des zweiten primären elektrischen Leistungswandlers zur Kompensation verbunden ist, und
> • Steuern eines zweiten sekundären elektrischen Leistungswandlers zur Kompensation (36), der über den Transformator (25, 26, 27, 60) mit dem primären Leistungswandler zur Kompensation verbunden ist, und Steuern der zweiten Hochfrequenzschaltstufe des zweiten primären Leistungswandlers zur Kompensation, um den zweiten Speicherkondensator in Abhängigkeit von dem momentanen Leistungssollwert zu laden oder zu entladen.

7. Verfahren nach einem der Ansprüche 5 oder 6, wobei der primäre elektrische Leistungswandler (28) eine dritte Hochfrequenzschaltstufe (411) aufweist, der Transformator vom Typ dreiphasig (60) ist und drei Leistungsschenkel (61, 62, 63), einen Schenkel für freien Fluss (64), drei Primärspulen (65, 66, 67), die jeweils um einen anderen Leistungsschenkel gewickelt und mit einer anderen Hochfrequenzschaltstufe (411, 412, 413) verbunden sind, und drei Sekundärspulen (68, 69, 70), die jeweils um einen anderen Leistungsschenkel gewickelt sind, aufweist, wobei jede Sekundärspule mit dem sekundären elektrischen Leistungswandler (34) oder einem der sekundären Wandler zur Kompensation (35, 36) verbunden ist, wobei die Leistungsschenkel im Transformator so angeordnet sind, dass die gegenseitigen Induktivitäten zwischen den Primärspulen (15, 16, 17) gleich sind, wobei diese Bedingung durch einen äquidistanten Abstand der Leistungsschenkel zueinander erfüllt wird, und derart, dass der Schenkel für freien Fluss von jedem der Leistungsschenkel äquidistant ist.

8. Verfahren nach einem der Ansprüche 5 bis 7, wobei, wenn die vom einphasigen elektrischen Versorgungsnetz (R2) gelieferte Momentanleistung größer ist als der momentane Leistungssollwert, der gleich einer ersten Leistungsschwelle (Sp) ist, jeder sekundäre elektrische Leistungswandler zur Kompensation(35, 36) und die Hochfrequenzschaltstufe (412, 413) jedes primären Wandlers zur Kompensation (29, 30) gesteuert werden, um jeden schaltbaren Speicherkondensator (43, 46) und jeden Filterkondensator (42) zu laden.

9. Verfahren nach einem der Ansprüche 5 bis 8, wobei, wenn die vom einphasigen elektrischen Versorgungsnetz (R2) gelieferte Momentanleistung kleiner ist als der momentane Leistungssollwert, der gleich einer ersten Leistungsschwelle (Sp) ist, jeder sekundäre elektrische Leistungswandler zur Kompensation(35, 36) und die Hochfrequenzschaltstufe (412, 413) jedes primären elektrischen Leistungswandlers zur Kompensation (29, 30) gesteuert werden, um jeden schaltbaren Speicherkondensator (43, 46) und jeden Filterkondensator (42) zu entladen.

10. Verfahren nach einem der Ansprüche 5 bis 7, wobei, wenn die von der Batterie (22) gelieferte Momentanleistung größer ist als der momentane Leistungssollwert, der gleich einer ersten Leistungsschwelle (Sp) ist, jeder sekundäre elektrische Leistungswandler zur Kompensation (35, 36) und die Hochfrequenzschaltstufe (412, 413) jedes primären elektrischen Leistungswandlers zur Kompensation (29, 30) gesteuert werden, um jeden schaltbaren Speicherkondensator (43, 46) und jeden Filterkondensator (42) so zu laden, dass die momentane elektrische Leistung, die vom einphasigen elektrischen Versorgungsnetz empfangen wird, gleich der zweiten Leistungsschwelle ist.

11. Verfahren nach einem der Ansprüche 5 bis 7 und 10, wobei, wenn die von der Batterie (22) gelieferte Momentanleistung kleiner ist als die Leistungsschwelle, die gleich einer ersten Leistungsschwelle (Sp) ist, jeder sekundäre elektrische Leistungswandler zur Kompensation (35, 36) und die Hochfrequenzschaltstufe (412, 413) jedes primären elektrischen Leistungswandlers zur Kompensation (29, 30) gesteuert werden, um jeden schaltbaren Speicherkondensator (43, 46) und jeden Filterkondensator (42) zu entladen.

**Claims**

1. Battery charger (21) for a motor vehicle (20), comprising a primary electrical power converter (28) and a secondary electrical power converter (34) that are connected by a transformer (25, 26, 27, 60), the primary power converter and the secondary power converter being configured to transfer the maximum instantaneous power delivered by a power supply network (R2) or a battery (22) to the battery or the power supply network, respectively, **characterized in that** the charger comprises:

   • at least one primary compensation electrical power converter (29) comprising a high-frequency switching stage (412) whose output is connected to the transformer,
   • a filter capacitor (42) connected between two input terminals of the high-frequency switching stage of the primary compensation converter,
   • at least one secondary compensation electrical power converter (35) connected to the primary compensation converter via a transformer (25, 26, 27, 60), and
   • a switchable storage capacitor (43) connected between the two input terminals of the high-frequency switching stage of the primary compensation converter (29),
   • the secondary compensation electrical power converter (35) and the high-frequency switching stage of the primary compensation converter being configured to charge or discharge the storage capacitor according to an instantaneous power setpoint.

2. Charger according to Claim 1, further comprising a second switchable storage capacitor (46) connected between the two input terminals of a second high-frequency switching stage (413) of a second primary compensation electrical power converter (30), and a second secondary compensation electrical power converter (36) connected to the second primary compensation converter via a transformer (25, 26, 27, 60), the second secondary compensation converter and the second high-frequency switching stage of the second primary compensation converter being configured to charge or discharge the second storage capacitor according to the instantaneous power setpoint equal to a constant first power threshold (Sp).

**3.** Charger according to Claim 2, wherein the primary electrical power converter (28) comprises a third high-frequency switching stage (411), the transformer to which the primary electrical power converter is connected is of three-phase type (60) and comprises three power pads (61, 62, 63), a free flux pad (64), three primary coils (65, 66, 67), each wound around a different power pad and connected to a different high-frequency switching stage (411, 412, 413), and three secondary coils (68, 69, 70), each wound around a different power pad, each secondary coil being connected to the secondary electrical power converter (34) or to one of the secondary compensation converters (35, 36), the power pads being arranged in the transformer such that the mutual inductances between the primary coils are the same, this condition being satisfied by an equal distance between the power pads, and such that the free flux pad is equidistant from each of the power pads.

**4.** Motor vehicle (20) comprising a battery (22) and a charger (21) according to any one of Claims 1 to 3, the battery being connected to the secondary circuit (24).

**5.** Method for exchanging electrical energy between a battery (22) for a motor vehicle (20) and a single-phase power supply network (R2) that are connected to a battery charger (21), comprising controlling a primary electrical power converter (28) and a secondary electrical power converter (34) so as to transfer the maximum instantaneous power delivered by a power supply network (R2) or a battery (22) to the battery or the power supply network, respectively, **characterized in that** the method comprises:

  • switching a switchable storage capacitor (43) arranged in parallel with a filter capacitor (42) between two input terminals (E411, E412) of a high-frequency switching stage (412) of at least one primary compensation electrical power converter (29) of the charger such that the storage capacitor is connected to the two input terminals, and
  • controlling at least one secondary compensation electrical power converter (35) of the charger connected to the primary compensation power converter via a transformer (25, 26, 27, 50) of the charger and controlling the high-frequency switching stage of the primary compensation converter in order to charge or discharge the storage and filter capacitors according to an instantaneous power setpoint.

**6.** Method according to Claim 5, further comprising:

  • switching a second switchable storage capacitor (46) of a second primary compensation electrical power converter (30) such that the second storage capacitor is connected to the two input terminals of a second high-frequency switching stage (413) of the second primary compensation electrical power converter, and
  • controlling a second secondary compensation electrical power converter (36) connected to the primary compensation electrical power converter via the transformer (25, 26, 27, 60) and controlling the second high-frequency switching stage of the second primary compensation converter in order to charge or discharge the second storage capacitor according to the instantaneous power setpoint.

**7.** Method according to either one of Claims 5 and 6, the primary electrical power converter (28) comprising a third high-frequency switching stage (411), wherein the transformer is of three-phase type (60) and comprises three power pads (61, 62, 63), a free flux pad (64), three primary coils (65, 66, 67), each wound around a different power pad and connected to a different high-frequency switching stage (411, 412, 413), and three secondary coils (68, 69, 70), each wound around a different power pad, each secondary coil being connected to the secondary electrical power converter (34) or to one of the secondary compensation converters (35, 36), the power pads being arranged in the transformer such that the mutual inductances between the primary coils (15, 16, 17) are the same, this condition being satisfied by an equal distance between the power pads, and such that the free flux pad is equidistant from each of the power pads.

**8.** Method according to any one of Claims 5 to 7, wherein, when the instantaneous power delivered by the single-phase power supply network (R2) is greater than the instantaneous power setpoint equal to a first power threshold (Sp), each secondary compensation electrical power converter (35, 36) and the high-frequency switching stage (412, 413) of each primary compensation converter (29, 30) are controlled in order to charge each switchable storage capacitor (43, 46) and each filter capacitor (42).

9. Method according to any one of Claims 5 to 8, wherein, when the instantaneous power delivered by the single-phase power supply network (R2) is less than the instantaneous power setpoint equal to a first power threshold (Sp), each secondary compensation electrical power converter (35, 36) and the high-frequency switching stage (412, 413) of each primary compensation electrical power converter (29, 30) are controlled in order to discharge each switchable storage capacitor (43, 46) and each filter capacitor (42).

10. Method according to any one of Claims 5 to 7, wherein, when the instantaneous power delivered by the battery (22) is greater than the instantaneous power setpoint equal to a first power threshold (Sp), each secondary compensation electrical power converter (35, 36) and the high-frequency switching stage (412, 413) of each primary compensation electrical power converter (29, 30) are controlled in order to charge each switchable storage capacitor (43, 46) and each filter capacitor (42) such that the instantaneous electrical power received by the single-phase electrical network is equal to the second power threshold.

11. Method according to any one of Claims 5 to 7 and 10, wherein, when the instantaneous power delivered by the battery (22) is less than the power threshold equal to a first power threshold (Sp), each secondary compensation electrical power converter (35, 36) and the high-frequency switching stage (412, 413) of each primary compensation electrical power converter (29, 30) are controlled in order to discharge each switchable storage capacitor (43, 46) and each filter capacitor (42).

# ART ANTERIEUR

Fig.1

# ART ANTERIEUR

Fig.2

Fig.3

Fig.4

Fig.5

Fig.6

EP 4 252 342 B1

Fig.7

Fig.8

18

Fig.9

Fig.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3317955 A